# EUROPEAN PATENT APPLICATION

(11) **EP 2 136 154 A2**
(43) Date of publication of application: **23.12.2009**
(21) Application number: 09162647.3
(22) Date of filing: 12.06.2009
(51) Int. Cl.: F24J 2/18

(54) **Apparatus for collecting sunlight**

(30) Priority: 16.06.2008 KR 20080056577; 14.08.2008 KR 20080080182
(71) Applicant: Ramfes, Inc., Bucheon-si, Gyeonggi-do 420-806 (KR)
(72) Inventor: Joh, Young-Suk, Incheon City 403-010 (KR); Lee, Seoung-Wook, Gyeonggi-do 445-360 (KR)
(74) Representative: Chaillot, Geneviève

(57) **Abstract**

An apparatus for collecting sunlight includes a primary focus reflector, a secondary parallelization reflector, and a connection mechanism. The primary focus reflector has an inner rounded surface, an outer plane formed on an edge of the inner rounded surface, and a through-hole formed at a center of the inner rounded surface. The primary focus reflector collects sunlight on a focus in front of the inner rounded surface. The secondary parallelization reflector is disposed near the focus in front of the primary focus reflector and reflects the sunlight, having been reflected by the primary focus reflector towards the through-hole as parallel light. The connection mechanism connects the secondary parallelization reflector to the primary focus reflector to be secured near the focus. The apparatus further includes a power generation module disposed behind the reflectors. The apparatus has improved light collection and power generation efficiency.

## Description

### BACKGROUND OF THE INVENTION

### 1. Field of the Invention

The present invention relates to an apparatus for collecting sunlight. More particularly, the present invention relates to an apparatus for collecting sunlight which includes at least two reflectors arranged to perform two reflections and allow light to be collected on a location behind the reflectors by secondary reflection, so that the collected light can be used at this location, thereby guaranteeing a sufficient light collection area and enabling various applications for power generation using sunlight.

### 2. Description of the Related Art

A solar collection system has functions of collecting sunlight at a high density to improve power generation efficiency as much as possible and converting solar energy into heat or electric energy.

Solar generation systems including solar cells and light collectors have various merits in that the systems allow easy maintenance and have a long lifespan without causing resource depletion. However, the systems entail burdens of high installation costs and provide relatively low energy efficiency.

The solar generation system includes a planar solar collector (low temperature type solar collector of 10°C or less), a parabolic trough solar collector (PTC), a compound parabolic collector (medium temperature type solar collector of 300°C or less), or a dish type parabolic solar collector (high temperature type solar collector of 300°C or more) which has a parabolic surface.

Particularly, the parabolic solar collector is used to obtain high temperatures and includes a parabolic reflector that reflects light to be collected on a predetermined portion (focus) inside the reflector, where a generator is disposed for heat generation or electricity generation.

In the parabolic solar collector, however, the generator is disposed in front of the reflector to shield the reflector, thereby deteriorating light collection efficiency. Moreover, the size reduction of the generator entails deterioration in power generation capability.

### SUMMARY OF THE INVENTION

The present invention is conceived to solve the above and other problems of the related art, and an aspect of the present invention is to provide an apparatus for collecting sunlight that includes a primary focus reflector to collect light on a location in front of the primary reflector and a secondary reflector having a smaller size than the primary reflector to transfer the collected light to a location behind the primary reflector via a through-hole formed in the primary reflector to guarantee as large a light collection area of the primary reflector as possible without deteriorating light collection efficiency.

In accordance with an aspect of the present invention, an apparatus for collecting sunlight includes: a light collection module, the light collection module including a primary focus reflector collecting and reflecting sunlight to a secondary parallelization reflector and having a through-hole formed at a portion thereof, and a secondary parallelization reflector disposed in front of the primary focusing reflector and reflecting the sunlight received from the primary focus reflector to a location behind the primary focus reflector through the through-hole; and a power generation module including one of a heat collector receiving the sunlight reflected by the secondary parallelization reflector and converting solar energy into thermal energy and a power generator receiving the sunlight reflected by the secondary parallelization reflector and converting the solar energy into electric energy.

The apparatus may further include a protective cover composed of a transparent material and mounted on a front side of the primary focus reflector to cover the primary focus reflector.

The apparatus may further include a tertiary-reflection module located behind the primary focus reflector to reflect and transfer the sunlight, having been transferred to the location behind the primary focus reflector through the through-hole, to the power generation module.

The tertiary-reflection module may include a tertiary planar reflector and a supporter supporting the tertiary planar reflector, in which the tertiary planar reflector is rotated on the supporter in a horizontal direction or pivoted upward and downward at a constant angle with respect to the horizontal direction on the supporter.

An object of the invention is an apparatus for collecting sunlight, comprising:
a primary focus reflector having an inner rounded surface, an outer plane extending from an edge of the inner rounded surface, and a through-hole formed at a center of the inner rounded surface, the primary focus reflector collecting sunlight on a focus in front of the inner rounded surface;
a secondary parallelization reflector disposed near the focus in front of the primary focus reflector and reflecting the sunlight, having been reflected by the primary focus reflector towards the through-hole as parallel light; and
a connection member connecting the secondary parallelization reflector to the primary focus reflector to be secured near the focus.

Preferably, the inner rounded surface has one of a spherical shape and a parabolic shape.

Preferably, at least one of the primary focus reflector and the secondary parallelization reflector is composed of polybutylene terephthalate (PBT).

Preferably, the apparatus further comprises:
a protective cover composed of a transparent material and disposed in front of the primary focus reflector to cover the primary focus reflector and the secondary parallelization reflector.

Preferably, the protective cover is coupled to the primary focus reflector, with an edge of the protective cover contacting the outer plane of the primary focus reflector.

Preferably, the protective cover has a planar shape.

Preferably, a surface of the protective cover is coated with a photocatalyst material comprising TiO₂.

Preferably, the apparatus further comprises:
a protrusion extending rearward in a cylindrical shape from the through-hole of the primary focus reflector to guide the sunlight, having been reflected towards the through-hole by the secondary parallelization reflector, to a location behind the primary focus reflector.

Preferably, the connection member is provided with a length adjustment mechanism that adjusts a position of the secondary parallelization reflector by adjusting a length of the connection member.

Preferably, the apparatus further comprises:
a power generation module including one of a heat collector and a power generator, the heat collector converting solar energy into heat energy after receiving the sunlight reflected by the secondary parallelization reflector, and the power generator converting the solar energy into electric energy after receiving the sunlight reflected by the secondary parallelization reflector.

Preferably, the apparatus further comprises:
a tertiary reflection module located behind the primary focus reflector to reflect and transfer the sunlight, having been transferred to a location behind the primary focus reflector through the through-hole, to the power generation module.

Preferably, the tertiary reflection module comprises a tertiary planar reflector reflecting the sunlight, having been reflected by the secondary parallelization reflector, toward the power generation module, and a supporter supporting the tertiary planar reflector, the tertiary planar reflector being rotated on the supporter in a horizontal direction or being pivoted upward and downward at a constant angle with respect to the horizontal direction on the supporter.

Preferably, the tertiary reflection module comprises:
a controller including a solar position tracking mechanism converting a variable position of the Sun into positional information given as a numerical value, and a look-up table comprising a database of information about preset upward-downward and horizontal pivot angles of the tertiary planar reflector according to the positional information, the controller sending a drive signal having information about an pivot angle of the tertiary planar reflector according to the position of the Sun; and
an angle adjustment module receiving the drive signal from the controller and rotating the tertiary planar reflector at a predetermined angle corresponding to the drive signal.

Preferably, a surface of the heat collector is subjected to sand blasting to increase a surface area of the heat collector.

Preferably, a surface of the heat collector is subjected to black chrome plating to a thickness of 1∼50µm.

Preferably, a surface of the heat collector is coated with an aero-sol containing gaseous molecules in a silicon structure.

Preferably, at least one of the primary focus reflector and the secondary parallelization reflector is subjected to primary aluminum coating to a thickness of 1∼100µm on a surface thereof, followed by secondary SiO₂ coating to a thickness of 10∼50µm.

### BRIEF DESCRIPTION OF THE DRAWINGS

The above and other aspects, features and advantages of the present invention will become apparent from the following detailed description of exemplary embodiments given in conjunction with the accompanying drawings, in which:
Fig. 1 is a diagram of an apparatus for collecting sunlight according to one embodiment of the present invention;
Fig. 2 is a side sectional view of reflectors of the apparatus including a protective cover according to one embodiment of the present invention;
Fig. 3 is a perspective view of a modification of the apparatus according to one embodiment of the present invention, in which a secondary parallelization reflector is provided to a primary focus reflector in a modified manner;
Figs. 4 (a) and (b) are conceptual views illustrating multiple light collection modules associated with each other, according to one embodiment of the present invention;
Figs. 5 (a) to (d) are conceptual views illustrating various arrays of light collection modules;
Fig. 6 is a perspective view of a tertiary reflection module according to one embodiment of the present invention; and
Fig. 7 is a block diagram illustrating a principle of controlling pivot movement of a tertiary planar reflector of the tertiary reflection module according to the embodiment of the present invention.

### DETAILED DESCRIPTION OF THE EMBODIMENT

Hereinafter, embodiments of the invention will be described in detail with reference to the accompanying drawings. It should be noted that the drawings are not to precise scale and like components will be denoted by like reference numerals throughout the drawings.

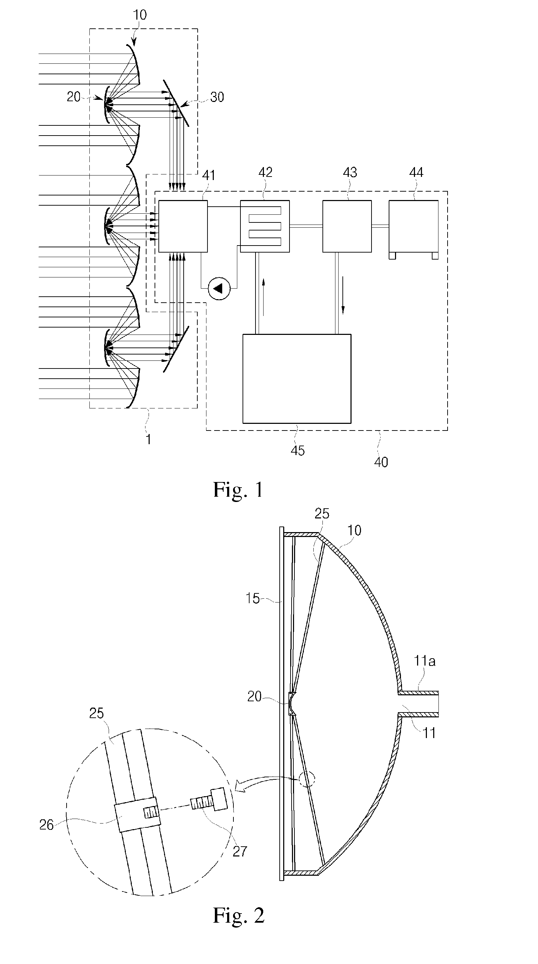

Referring to Figs. 1 and 2, an apparatus for collecting sunlight according to one embodiment of the invention includes a light collection module 1 and a power generation module 40.

The light collection module 1 collects sunlight on a predetermined location with optimal light collection efficiency. The light collection module 1 includes a primary focus reflector 10 and a secondary parallelization reflector 20. The light collection module 1 may further include a tertiary reflection module 30, a protective cover 15, and a solar position tracking mechanism.

The power generation module 40 converts solar energy, which is collected by the light collection module 1, into heat energy or electric energy. The power generation module 40 includes a heat collector 41, a water tank 45, a heat exchanger 42, a power generator 43, and an electric condenser 44.

The light collection module 1 and the power generation module 40 will be described hereinafter in more detail in connection with various embodiments.

The primary focus reflector 10 may have various shapes including a spherical shape, a parabolic shape, and the like. In this embodiment, the primary focus reflector 10 has a parabolic shape. The primary focus reflector 10 primarily collects and focuses sunlight to transfer the collected light (that is, sunlight) to the secondary parallelization reflector 20.

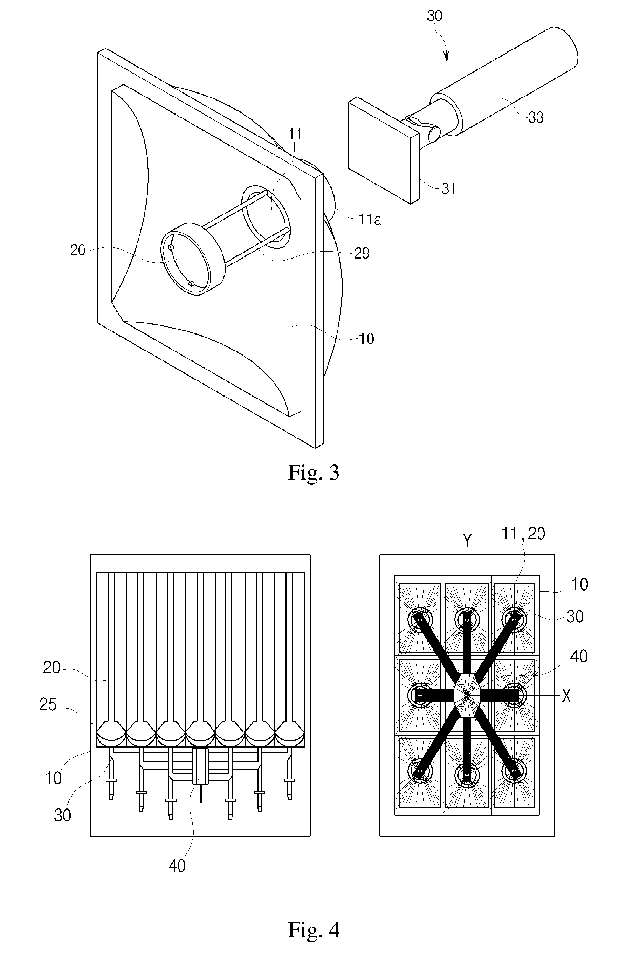

Here, an outer appearance of the primary focus reflector 10 is not a parabolic trough shape, which is well known in the art, but a solar-dish shape, as shown in Fig. 3. The solar-dish shaped primary focus reflector 10 may have a spherical or parabolic inner rounded surface. In this embodiment, the solar-dish shaped primary focus reflector 10 has a parabolic inner surface, considering an installation location of the secondary parallelization reflector 20 described below and light collection efficiency.

The primary focus reflector 10 has a through-hole 11 formed at the center thereof and having a predetermined diameter (which is not necessarily the same as that of the secondary parallelization reflector), so that light is transferred to a location behind the primary focus reflector 10 through the through-hole 11 by reflection of the secondary parallelization reflector 20.

The primary focus reflector 10 may be further provided with a protrusion 11a behind the through-hole 11. The protrusion 11a allows sunlight passing through the through-hole 11 to be more efficiently transferred to the power generation module 40 without scattered reflection. As a result, it is possible to reduce loss of light behind the primary focus reflector 10.

The secondary parallelization reflector 20 is located in front of the primary focus reflector 10 to transfer the light, which has been primarily collected by the primarily, towards the through-hole 11.

Here, since the secondary parallelization reflector 20 is located in front of the primary focus reflector 10, there is a possibility of reducing the light collection efficiency by shielding sunlight directed toward the primary focus reflector 10. Therefore, in order to minimize this problem, the size of the secondary parallelization reflector 20 may be reduced as much as possible. For example, the secondary parallelization reflector 20 may have a smaller surface area corresponding to 2∼10% of the surface area of the primary focus reflector 10. Alternatively, the secondary parallelization reflector 20 may have a surface area of 2∼5% of the surface area of the primary focus reflector 10.

The secondary parallelization reflector 20 may be secured in a suspended state by a plurality of wires 25 extending to a periphery or other suitable portions of the primary focus reflector 10. Further, the secondary parallelization reflector 20 is configured to reflect light, which has been collected by the primary focus reflector 10, as parallel light in order to achieve optimal efficiency in reflection and light collection.

The wire 25 is provided with a length adjustment mechanism 26 capable of adjusting the length of the wire 25. A distance between the primary focus reflector 10 and the secondary parallelization reflector 20 is adjusted by the length adjustment mechanism 26, so that the location of the secondary parallelization reflector 20 can be precisely adjusted according to the shape of the primary focus reflector 10 or the location of the through-hole 11.

The length adjustment mechanism 26 can be fabricated by various manners well-known in the art. For example, two strings of wires 25 and a fastening frame 26 for fastening the wires 25 are prepared. Then, one of the wires 25 is pushed or pulled through the fastening frame 26 to have a predetermined length and is securely fixed in the fastening frame 26 by a fastener 27.

As such, the secondary parallelization reflector 20 is different from that of the conventional apparatus for collecting sunlight, in which light is reflected to a location in front of the primary reflector by the primary or secondary reflector and is used at this location. That is, the secondary parallelization reflector 20 reflects light not to a location in front of the primary focus reflector 10, but to a location behind the primary focus reflector 10. The reasons for using the secondary parallelization reflector 20 according to this embodiment are described in brief hereinafter.

Firstly, since a front part of the primary focus reflector 10 constitutes a light collection section, positioning of a heat collector or a power generator on this part results in shielding the light collection section by the volume thereof, thereby deteriorating light collection efficiency. Secondly, when mounting the protective cover 15 to protect the primary focus reflector 10, the protective cover 15 can be easily mounted on the primary focus reflector 10 with assistance from the secondary parallelization reflector 20, thereby enabling easy installation of the protective cover.

Fig. 3 is a perspective view of a modification of the apparatus according to one embodiment of the invention, in which the secondary parallelization reflector is provided to the primary focus reflector in a modified manner. In this embodiment, multiple orifices are formed around the through-hole 11 and are respectively fitted onto multiple supporters 29, each of which has a predetermined length and is disposed to extend from the front side of the primary focus reflector 10. Further, the secondary parallelization reflector 20 has multiple orifices formed along an inner circumference thereof such that a distal end of each of the supporters 29 is fitted into the associated orifice to mount the secondary parallelization reflector 20 on the supporters 29.

This arrangement of the secondary parallelization reflector 20 minimizes the problem of shielding the surface of the primary focus reflector 10 by the multiple wires, as shown in Fig. 2, and prevents the secondary parallelization reflector 20 from being unnecessarily moved by the elasticity of the wires, so that the secondary parallelization reflector 20 can be more securely mounted in front of the primary focus reflector 10.

It should be understood that the length of the supporter 29 can be adjusted according to a focal point of the primary focus reflector 10. Further, although not shown in the drawings, the supporter 29 may be configured to have an adjustable length as in a foldable antenna.

As shown in Fig. 2, the protective cover 15 is transparent and is disposed at a location collinear with the secondary parallelization reflector 20 (here, the secondary parallelization reflector 20 may be mounted to the protective cover or may be integrally formed therewith) or in front of the primary focus reflector 10 to protect the primary focus reflector 10 (and the secondary parallelization reflector 20). The protective cover 15 may be formed of a transparent material, such as glass, acryl, polycarbonate (PC), or the like, which has sufficient transparency and durability, to ensure that sunlight passes sufficiently and properly therethrough.

According to one embodiment of the invention, the protective cover 15 may be mounted on a parallel plane extending straightly from an outer periphery of the primary focus reflector 10 or may be formed to have a convex curvature with respect to the outer periphery thereof to sufficiently cover the primary focus reflector 10. It should be understood that mounting the protective cover 15 on the parallel plane extending straightly from the outer periphery of the primary focus reflector 10 is more advantageous to prevent collection of sunlight on the focal point from being obstructed by unnecessary refraction.

The protective cover 15 serves to prevent deterioration of light collection efficiency or durability of the primary focus reflector 10 exposed to the outside, which can occur due to contamination by foreign matter according to climate and season.

Further, the surface of the protective cover 15 may be subjected to waterproofing treatment to ensure easy cleaning of the protective cover using water. Additionally, the surface of the protective cover 15 may be subjected to hard-coating treatment to minimize scratches due to friction or impact. Moreover, the surface of the protective cover 15 may be subjected to photocatalyst coating treatment using TiO₂ materials (photocatalyst material) which can decompose foreign matter such as organic materials and the like through reaction with sunlight.

Use of the protective cover 15 can guarantee light collection efficiency of the primary focus reflector 10 by a convenient cleaning operation, and enables enhancement in durability by permitting dust or foreign matter to be easily removed even by rain or the like.

Light transferred to a location behind the primary focus reflector 10 by the secondary parallelization reflector 20 may be directly used for heat collection or power generation by the power generation module 40. The apparatus may further include the tertiary reflection module 30 behind the primary focus reflector 10.

According to the embodiment of the invention, the light collection module 1 may be realized to have a small size of 300x300 or 700x700 mm. The small size of the light collection module 1 allows not only a reduction in manufacturing costs of the respective reflectors, but also a decrease in focal distances of the respective reflectors and a reduction in overall volume of the apparatus, thereby providing making the apparatus applicable to a variety of geographic regions. Additionally, the small size of the light collection module 1 allows multiple light collection modules to be arranged in a variety of matrices to ensure superior light collection capability and more flexible arrangement of the light collection modules while providing convenience of control.

Thus, when the apparatus includes an array of light collection modules 1, it may be attempted to increase the light collection efficiency as much as possible by re-collecting light, which has been collected by the individual light collection modules 1.

To achieve such an attempt, the tertiary reflection module 30 includes a tertiary planar reflector 31 and a supporter 33. The tertiary reflection module 30 serves to maximize solar energy generation by redirecting light, which has been transferred to the location behind the primary focus reflector 10 via the through-hole 11 of the primary focus reflector 10 by the secondary parallelization reflector 20 in each of the multiple light collection modules 1, towards the power generation module 40.

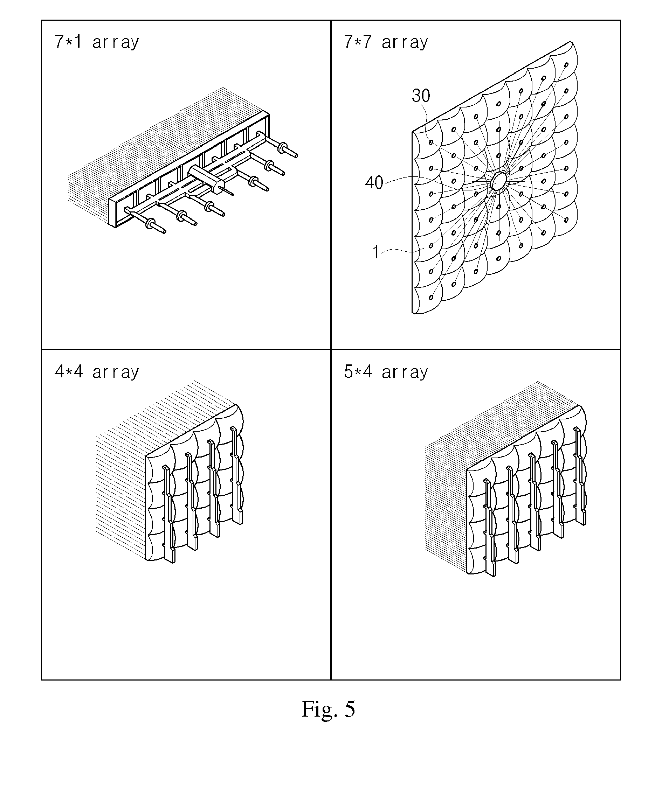

Figs. 4 (a) and (b) are conceptual views illustrating multiple light collection modules associated with each other, according to one embodiment of the present invention, and Figs. 5 (a) to (d) are conceptual views illustrating various arrays of the light collection modules.

Fig. 4(a) illustrates a 1x7-array of light collection modules 1, and Fig. 4(b) illustrates a 3x3-array of light collection modules 1.

Referring to Figs. 1 and 4, in the tertiary reflection module 30, the tertiary planar reflector 31 is pivotally supported on the supporter 33 and reflects light, which has reached the location behind the primary focus reflectors 10 via the through-hole 11 of the primary focus reflectors 10 by reflection of the secondary parallelization reflectors 20, towards the power generation module 40 such that the light is finally collected into the power generation module 40, for example, the heat collector.

In the tertiary reflection module 30, the tertiary planar reflector 31 may have a variety of reflection angles set according to the position and size of the power generation module 40. In this regard, it should be noted that light reflected by the tertiary planar reflector 31 is necessarily directed towards the power generation module 40.

Although the tertiary reflection module 30 is described as being provided for the multiple light collection modules 1 in this embodiment, it may also be provided for the apparatus including a single light collection module 1. On the other hand, although it may also be conceived to dispose a fourth or fifth planar reflector for transferring light to another location, three reflectors, that is, the primary to tertiary reflectors as described above, may be sufficient to prevent deterioration of light collection efficiency caused by frequent reflection.

Referring to Fig. 5, according to the embodiment of the invention, the number and arrangement of unit light collection modules 1 may be determined, as needed, according to circumstances and requirements of installation sites. For example, the light collection modules 1 may be arranged in a quadrangle array of 2x2, 3x3, 4x4, or the like, or in a parallelepiped array of 1x7 or the like.

Each of the light collection modules 1 includes a connection member to connect with other light collection units 1. Examples of the connection member include a bracket, a groove/protrusion configuration for tongue-and-groove coupling, and the like.

In other words, the light collection module 1 according to the embodiment of the invention permits application of a module assembly manner, thereby enabling improvement in installation and assembly efficiency, mass production, and reduction in manufacturing costs.

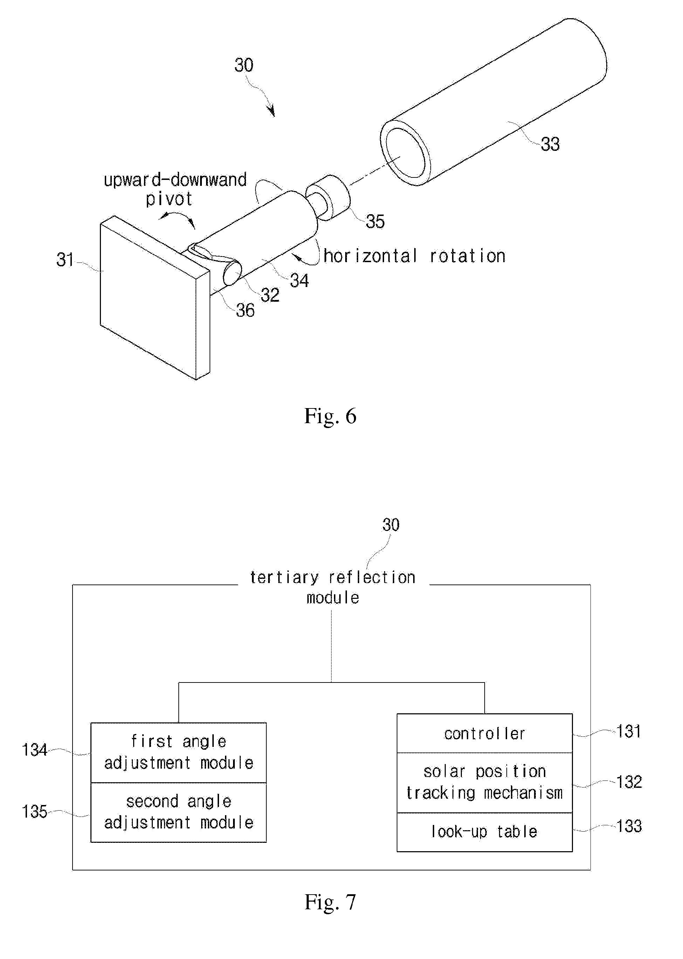

As clearly shown in Fig. 6, in the tertiary reflection module 30 according to the embodiment, the tertiary planar reflector 31 is pivotally supported on the supporter 33, which has a predetermined length.

Particularly, the tertiary planar reflector 31 is connected to the supporter 33 via a horizontal pivot part 32, which can act as a horizontal shaft for upward-downward pivot movement of the tertiary planar reflector 31 on the support 33, and a vertical pivot part 34, which can act as a vertical shaft for horizontal rotation of the tertiary planar reflector 31 on the support 33, so that the tertiary planar reflector 31 can be varied in installation angle with respect to the horizontal direction and can be rotated at a predetermined angle in the vertical direction.

In other words, the tertiary planar reflector 31 is connected to an upper part of the supporter 33 via brackets 32a disposed at opposite sides of a lower part of the tertiary planar reflector 31, and is connected to the horizontal pivot part 32 disposed inside the brackets 32a by a connection part 36, which extends a predetermined length from the lower part of the tertiary planar reflector 31 into the brackets 32a although not shown in the drawings.

The horizontal pivot part 32 appears similar to a well-known hinge that extends in the horizontal direction. However, according to one embodiment of the invention, the horizontal pivot part 32 is provided with a stopper at a portion thereof connected to the brackets 32a so as to be pivoted not by natural force but only by a drive motor, and may be configured to increase a frictional coefficient. For example, a fine protrusion may be formed around the brackets and a groove corresponding to the protrusion may be formed around the horizontal pivot part for tongue-and-groove coupling. This configuration is provided to prevent the tertiary planar reflector 31 from being easily rotated by natural forces such as wind or the like, thereby preventing obstruction in light collection into the power generation module 40.

Although not shown in the drawings, the horizontal pivot part 32 is connected to a drive motor, for example, a stepper motor for precise rotation control, and is pivoted by the drive motor, so that the tertiary planar reflector 31 connected to the horizontal pivot part 32 can be pivoted at a constant angle with respect to the horizontal direction.

Further, the horizontal pivot part 32 is connected at one side thereof to the vertical pivot part 34, which extends in the vertical direction and is parallel to an inner space of the supporter 33. The vertical pivot part 34 is dispose in the supporter 33 and is connected to a separate motor 35. Thus, the vertical pivot part 34 can be rotated at a constant angle with respect to the horizontal direction by the motor 35.

With this configuration, the tertiary planar reflector 31 can theoretically be rotated 360 degrees with respect to a planar surface by rotation of the vertical pivot part 34.

Here, the horizontal pivot part 32 and the vertical pivot part 34 may be implemented by well-known mechanical components, such as universal joints. Specifically, as shown in Fig. 6, the horizontal pivot part 32 is provided between the connection part 36 and the vertical pivot part 34 and is connected to a separate drive motor capable of directly transmitting a rotational force to the horizontal pivot part 32 to obtain the pivot movement of the horizontal pivot part 32. For example, the horizontal pivot part 32 is connected to the drive motor via a separate shaft or is provided at one side thereof with a gear such that a power transmission gear contacting the gear can be rotated by the drive motor. Further, the vertical pivot part 34 may also be rotated by a separate motor 35 which is located at a lower end of the vertical pivot part 34. The connection part 36 is connected to a lower surface of the tertiary planar reflector 31 to pivot the tertiary planar reflector 31 in the horizontal or upward-downward direction by horizontal or upward-downward pivoting of the connection part 36.

As such, the horizontal or upward-downward pivoting of the tertiary reflector 31 serves to transfer sunlight, which has been collected in the light collection module 1, to the power generation module 40 with convenience and efficiency, corresponding to the Sun's path which continuously changes.

Fig. 7 is a block diagram illustrating a principle of controlling pivot movement of the tertiary planar reflector of the tertiary reflection module according to the embodiment of the invention.

As described above, the tertiary planar reflector 31 is required to change an angle on the supporter by tracing the Sun's path, which changes from the morning to the evening or according to seasons. Furthermore, when the multiple light collection modules 1 are used for light collection into a single power generation module 40 as shown in Fig. 4, it is necessary to accomplish precise adjustment of each disposition angle of the plural tertiary planar reflectors 31.

In order to achieve precise control of the disposition angle of the tertiary planar reflector 31, the tertiary reflection module 30 according to this embodiment further includes a controller 131, a first angle adjustment module 134, and a second angle adjustment module 135. The controller 131 includes a solar position tracking mechanism 132 and a look-up table 133.

The controller 131 sends drive signals to the first and second angle adjustment modules 134, 135 to adjust rotation degrees of the drive motor and the motor 35 connected to the horizontal and vertical pivot parts 32, 34, respectively. To this end, the controller 131 includes the solar position tracking mechanism 132, which can trace the position of the Sun and can convert information of a specific position of the Sun into numerical data, as known in the art. Further, the look-up table 133 of the controller 131 has a database obtained by previously calculating horizontal pivot angles and/or vertical pivot angles of the tertiary planar reflectors 31 for light collection into the power generation module 40 according to a numerical value (position value) of a specific position of the Sun, when a predetermined number of tertiary planar reflectors 31 is provided.

For example, when 1x7 tertiary reflection modules 30 are linearly arranged, the controller 131 sets serial numbers of the respective reflection modules 30 and extracts disposition angles of the tertiary planar reflectors 31 as drive signals from the look-up table 133, which will be taken by the tertiary planar reflectors 31 in the respective tertiary reflection modules 30 at a specific position of the Sun. Here, the specific position of the Sun is given as a predetermined numerical value indicating the position of the Sun by the solar position tracking mechanism 132. Then, the controller 131 sends the drive signals to the corresponding tertiary planar reflectors 31. The drive signals have different values since the multiple tertiary planar reflectors 31 have different disposition angles according to arrangement of multiple tertiary planar reflectors 31, a distance therebetween, or the like.

The drive signals may be divided into a horizontal drive signal for rotation of the horizontal pivot part 32 and a vertical drive signal for rotation of the vertical pivot part 34.

The first angle adjustment module 134 receives the horizontal drive signal from the controller 131 to adjust a rotation degree of the drive motor connected to the horizontal pivot part 34, and the second angle adjustment module 135 receives the vertical drive signal from the controller 131 to adjust a rotation degree of the motor 35 connected to the vertical pivot part 35.

With this configuration, the tertiary planar reflector 31 can transfer sunlight, which has been collected in the light collection module 1, to the power generation module 40 with more precision and efficiency corresponding to the position of the Sun or the arrangement of the tertiary planar reflectors 31.

Since a conventional reflector has a mirror surface formed by grinding the surface of glass or metal, the conventional reflector is heavy and likely to be damaged. To overcome such problems of the conventional reflector, the primary focus reflector 10 and the secondary parallelization reflector 20 may be formed of polymer resins, thereby reducing the weight of the reflector, the possibility of damage, and manufacturing costs. It should be understood that the tertiary planar reflector 31 may also be formed of the polymer resins for the same reasons.

One example of the polymer resin for the reflectors according to this embodiment includes polybutylene terephthalate, which is a light and durable material and permits mass production through injection molding. Alternatively, a material comprising 30% by weight of glass fibers and a mixture of PC and ABS as a base material may be used to improve heat resistance during surface coating at high temperatures.

Additionally, the reflectors 10, 20, 31 may be subj ected to metal coating treatment in order to maximize reflection efficiency.

Specifically, when performing the metal coating on the surfaces of the reflectors 10, 20, 31, chromium (Cr) or aluminum (Al) having a high reflection coefficient is coated to a thickness of 1∼100µm on the surfaces of the reflectors 10, 20, 31, followed by coating SiO₂ to a thickness of 10∼50µm on the Cr or Al coating to form a protective coating film thereon, thereby providing superior reflection efficiency.

According to the embodiment, the light collection module 1 includes the solar position tracking mechanism to control the orientation of the light collection module 1 according to the position of the Sun. The solar position tracking mechanism is well known in the art (see, for example, Korean Patent No. 343263, Korean Patent No. 836870, and the like), and thus, a detailed description thereof will be omitted herein.

Referring again to Fig. 1, the power generation module 1 functions like a well-known system that converts sunlight collected by a general sunlight collection module into thermal energy or electric energy.

In other words, the power generation module 40 receives light converged by the secondary parallelization reflector (20) (or the tertiary planar reflector 31) and uses the light to heat water or generate electric energy.

For example, the heat collector 41 has a function of collecting heat from light, and the heat exchanger 42 serves to directly warm cold water sent from the water tank 45.

Further, although the power generator 43 is connected to the heat exchanger 42 and the water tank 42, the power generator 43 has a main function of converting sunlight into electric energy. The electric condenser 44 serves to condense electricity generated by the power generator 43.

Here, the heat collector 41 may be formed of a metallic material such as aluminum, SUS or copper, and includes a heat medium for effectively converting sunlight into a heat source. The heat medium may be composed of tin, lead, salt, and other materials well-known in the art.

The surface of the heat collector 41 may be subjected to sand blasting to increase the surface area of the heat collector 41, and may be further subjected to coating with black paint or plating with black chrome (to a thickness of about 1∼50µm) to increase heat absorption efficiency.

The surface of the heat collector 41 may be further provided with an aero-gel to effectively shield heat loss to the outside.

Although not shown in the drawings, the aero-gel is formed on the surface of the heat collector 41 and contains gaseous molecules in a housing composed of various materials, for example, silicon nano-structures, thereby ensuring heat insulation effects superior to existing heat insulators.

The power generation module 40 has various applications. Particularly, since the power generation module 40 is located behind the primary focus reflector 10, the power generation module can be actively applied to a wider variety of applications without being restricted by the volume or the formation method thereof.

According to one embodiment of the invention, the apparatus includes a power generation module located behind reflectors to use light, thereby improving light collection and power generation efficiency while enabling various modifications in size and shape of the power generation module.

Further, according to one embodiment of the invention, the apparatus is provided with multiple light collection modules, each of which can collect and transfer light, having been reflected to a location behind the reflectors, to the power generation module, thereby enabling convenient adjustment of a light collection amount as needed, while allowing various arrangements and adjustment of the number of light collection modules.

Further, according to one embodiment of the invention, the reflectors of the apparatus are protected, thereby improving durability of the apparatus.

Further, according to one embodiment of the invention, the reflectors and the protective cover are subjected to specific surface treatment, thereby improving light collection efficiency and durability of the apparatus.

Moreover, according to one embodiment of the invention, the apparatus includes a tertiary reflector configured to be automatically adjusted in location according to a position of the Sun.

Although some embodiment have been provided to illustrate the invention in conjunction with the drawings, it will be apparent to those skilled in the art that the embodiments are given by way of illustration only, and that various modifications and changes can be made without departing from the spirit and scope of the invention as defined by the accompanying claims.

## Claims

1. An apparatus for collecting sunlight, comprising:
a primary focus reflector (10) having an inner rounded surface, an outer plane extending from an edge of the inner rounded surface, and a through-hole (11) formed at a center of the inner rounded surface, the primary focus reflector (10) collecting sunlight on a focus in front of the inner rounded surface;
a secondary parallelization reflector (20) disposed near the focus in front of the primary focus reflector (10) and reflecting the sunlight, having been reflected by the primary focus reflector (10) towards the through-hole (11) as parallel light; and
a connection member (25) connecting the secondary parallelization reflector (20) to the primary focus reflector (10) to be secured near the focus.

2. The apparatus according to claim 1, wherein the inner rounded surface has one of a spherical shape and a parabolic shape.

3. The apparatus according to claim 1, wherein at least one of the primary focus reflector (10) and the secondary parallelization reflector (20) is composed of polybutylene terephthalate (PBT).

4. The apparatus according to claim 1, further comprising;
a protective cover (15) composed of a transparent material and disposed in front of the primary focus reflector (10) to cover the primary focus reflector (10) and the secondary parallelization reflector (20).

5. The apparatus according to claim 4, wherein the protective cover (15) is coupled to the primary focus reflector (10), with an edge of the protective cover (15) contacting the outer plane of the primary focus reflector (10).

6. The apparatus according to claim 4, wherein the protective cover (15) has a planar shape.

7. The apparatus according to claim 4, wherein a surface of the protective cover (15) is coated with a photocatalyst material comprising TiO₂.

8. The apparatus according to claim 1, further comprising:
a protrusion (11a) extending rearward in a cylindrical shape from the through-hole (11) of the primary focus reflector (10) to guide the sunlight, having been reflected towards the through-hole (11) by the secondary parallelization reflector (20), to a location behind the primary focus reflector (10).

9. The apparatus according to claim 1, wherein the connection member (25) is provided with a length adjustment mechanism (26) that adjusts a position of the secondary parallelization reflector (20) by adjusting a length of the connection member (25).

10. The apparatus according to claim 1, further comprising:
a power generation module (40) including one of a heat collector (41) and a power generator (43), the heat collector (41) converting solar energy into heat energy after receiving the sunlight reflected by the secondary parallelization reflector (20), and the power generator (43) converting the solar energy into electric energy after receiving the sunlight reflected by the secondary parallelization reflector (20).

11. The apparatus according to claim 10, further comprising:
a tertiary reflection module (30) located behind the primary focus reflector (10) to reflect and transfer the sunlight, having been transferred to a location behind the primary focus reflector (10) through the through-hole (11), to the power generation module (40).

12. The apparatus according to claim 11, wherein the tertiary reflection module (30) comprises a tertiary planar reflector (30) reflecting the sunlight, having been reflected by the secondary parallelization reflector (20), toward the power generation module (40), and a supporter (33) supporting the tertiary planar reflector (30), the tertiary planar reflector (30) being rotated on the supporter (33) in a horizontal direction or being pivoted upward and downward at a constant angle with respect to the horizontal direction on the supporter (33)

13. The apparatus according to claim 12, wherein the tertiary reflection module (30) comprises:
a controller (131) including a solar position tracking mechanism (132) converting a variable position of the Sun into positional information given as a numerical value, and a look-up table (133) comprising a database of information about preset upward-downward and horizontal pivot angles of the tertiary planar reflector (30) according to the positional information, the controller (131) sending a drive signal having information about an pivot angle of the tertiary planar reflector (30) according to the position of the Sun; and
an angle adjustment module (134, 135) receiving the drive signal from the controller (131) and rotating the tertiary planar reflector (30) at a predetermined angle corresponding to the drive signal.

14. The apparatus according to claim 10, wherein a surface of the heat collector (41) is subjected to sand blasting to increase a surface area of the heat collector (41).

15. The apparatus according to claim 10, wherein a surface of the heat collector (41) is subjected to black chrome plating to a thickness of 1∼50µm.

16. The apparatus according to claim 10, wherein a surface of the heat collector (41) is coated with an aero-sol containing gaseous molecules in a silicon structure.

17. The apparatus according to claim 1, wherein at least one of the primary focus reflector (10) and the secondary parallelization reflector (20) is subjected to primary aluminum coating to a thickness of 1∼100µm on a surface thereof, followed by secondary SiO₂ coating to a thickness of 10∼50µm.
